Europäisches Patentamt

European Patent Office

Office européen des brevets

(19)

(11) **EP 0 319 797 B1**

(12) # EUROPEAN PATENT SPECIFICATION

(45) Date of publication and mention
of the grant of the patent:
**31.01.1996 Bulletin 1996/05**

(51) Int Cl.6: **G01N 21/88**, G06T 7/60

(21) Application number: **88119684.4**

(22) Date of filing: **25.11.1988**

(54) **Method and apparatus for measuring defect density and defect distribution**

Verfahren und Vorrichtung zur Messung der Fehlerdichte und -verteilung

Méthode et appareil pour mesurer la densité de défauts et leur distribution

(84) Designated Contracting States:
**DE FR GB**

(30) Priority: **09.12.1987 JP 309420/87**

(43) Date of publication of application:
**14.06.1989 Bulletin 1989/24**

(73) Proprietor:
**MITSUI MINING & SMELTING CO., LTD.
Chuo-ku, Tokyo (JP)**

(72) Inventor: **Moriya, Kazuo
Ageo-shi, Saitama-ken (JP)**

(74) Representative: **Kraus, Walter, Dr. et al
D-80539 München (DE)**

(56) References cited:
**US-A- 4 411 525**

- **JAPANESE JOURNAL OF APPLIED PHYSICS,
Vol. 22, No. 4, April 1983, Part 2, pages
L207-L209, Tokyo, Japan; K. MORIYA et al.:
"Abservation of Lattice Defects in GaAs and
Heat-treated Si Crystals by Infrared Light
Scattering Tomography"**
- **JAPANESE JOURNAL OF APPLIED PHYSICS
LETTERS, Vol. 26, No. 8, August 1987, Part 2,
pages L1255-L1257, Tokyo, Japan; J.P. InP
Crystals by Laser Scanning Tomography**
- **PATENT ABSTRACTS OF JAPAN, Vol. 11, No.
42 (P-545)(2489), 6 February 1987; & JP-A-61
213 651**
- **JOURNAL OF APPLIED PHYSICS, Vol. 62, No.
9, 1 November 1987, pages 3700-3703, New
York, NY, USA; P. SUCHET et al.: "Evidence of
the origin of infrared scattering in GaAs with
high-resolution infrared tomography**

Remarks:
The file contains technical information submitted
after the application was filed and not included in
this specification

## Description

The present invention relates to a method of automatically determining the defect density and defect distribution in a semiconductor wafer having a flat surface using laser scattering tomography, the method comprises

introducing a narrowed laser beam into the wafer through the flat surface along a direction perpendicular to said surface and scanning the laser beam along a desired cross-section to be inspected;

forming images by focusing the scattered light of the laser beam during the scanning;

photoelectrically converting the formed images into electrical signals of various intensities; and

converting the electrical signals into digital data and storing them into a memory of a computer as the image data of the cross-section.

Furthermore, the invention relates to an apparatus for laser scattering tomography for automatically determining the defect density and defect distribution in a semiconductor wafer having a flat surface, comprising:

a means for generating a narrowed laser beam;

a positioning means for varying the position of the wafer relative to the laser beam;

a control means for controlling the positioning means such that the laser beam is introduced into the wafer through the flat surface and the laser beam is scanned along a desired cross-section of the wafer to be inspected;

an optical means for forming images by focusing the scattered light of the laser beam during the scanning of the laser beam;

a photoelectric conversion means for converting the images formed by the optical means into electrical signals of various intensities,

an analog-to-digital conversion means for converting the electrical signals into digital data; and

a computer for storing the digital data in a memory thereof as the image data of the cross-section.

Moreover, the invention relates to a method of automatically obtaining the distribution of defect sizes in a semiconductor wafer having a flat surface.
Finally, the invention relates to a method of automatically obtaining the distribution of defect volume in a semiconductor wafer having a flat surface.

Particularly this invention relates to a method and apparatus for automatically measuring the defect (or flaw) density and defect distribution inside an object without the destruction thereof by processing scattering light-derived image data obtained by a device for analyzing the object by use of scattering lights, the device having a function of precisely measuring the position of a sample of the object.

According to the prior art the defect density in a crystal has conventionally been measured by first etching the surface of the crystal and then observing through a microscope or measuring mechanically the recesses formed on the etched surface. (Refer, for example, to Jenkins, M. W.: "A New Preferential Etch for Defects in Single Crystals", J. Electrochem. Soc., 124:752-762, 1977.)

Further, X-ray diffraction is also an effective method of measuring the defect intensity (Refer, for example, to Jungbluth, E. D.: J. Electrochem. Soc., 112:580, 1965.), and this method has been used as an effective means of detecting the dislocation, stacking faults and precipitates in crystals. On the other hand, a transmission type electron microscope has been used to detect the dislocation and very fine precipitates inside crystals. (Refer, for example, to Meieran, E. S.: Appl. Phys., 36: 2544, 1965.)

Furthermore, as a method of analyzing an object by use of scattering lights, Japanese Patent Laid-Open No. 109488/1979 (corresponding to U.S.P. No. 4,411,525) discloses a method of analyzing the internal structure of an object along a desired cross-section, which method comprises the steps of causing a light beam transmitting through a desired cross-section of an object to be analyzed, causing the object to move in a direction intersecting with the direction of the light beam so that the plane including the light beam becomes the desired cross-section, creating scattering lights which carry information of the internal structure along the path of the light beam transmitting through the object to scan along the cross-section, consecutively observing the scattering lights along an optical axis intersecting with the cross-section, and consecutively recording the observed scattering lights on a recording medium which is moved in synchronization with the scanning of the light beam, whereby the'internal structure of the object is analyzed along the cross-section by summing all the information of the scattering lights obtained by the scanning of the light beam.

Etching is currently used most widely in the process of measuring the distribution of defects in the internal structure of an object. However, it is intended for two-dimensional (superficial) observation of the defects that are distributed three-dimensionally in crystals and the measurement is not sufficient in accuracy. Etching may involve the use of toxic chemicals (hydrofluoric acid, hexavalent chromium, etc.) and the evolution of toxic gases, and, thus, it is a dangerous operation. Furthermore, because of being a destructive inspection method, the etching method is defective in that the crystal that has once been treated cannot be used for further measurements such as observation of a change in defects in the crystal after repeated annealing thereof.

An X-ray diffraction method is an effective means of measuring the defect density and can detect the dislocation and stacking faults. However, it can hardly detect small defects such as very fine precipitates inside silicon. It cannot be used for the observation of the interior of the crystal three-dimensionally, either. In the same way as the etching method, the X-ray diffraction method is not entirely safe because of exposure to X-rays.

An transmission type electron microscope can detect the dislocation and very fine precipitates in crystals with a sufficiently high level of sensitivity, but raises a problem in that the crystal must be sliced in a thickness of several thousand angstroms thereby to limit the microscope in its usability for measurement. In addition, this method using the electron microscope is not an expedient one since it needs a large-sized and complicated apparatus.

Furthermore, in the Japanese Journal of Applied Physics, vol. 22, no. 4, April 1983, part 2, pages L207 - L209, Tokyo, Japan; K. Moriya et al.: "Observation of Lattice Defects in GaAs and Heat-treated Si Crystals by Infrared Light Scattering Tomography", there are disclosed an apparatus and a method of the first type mentioned in the beginning.

Generally, in accordance with conventional methods of analyzing an object by use of scattering lights, it has not been possible to automatically measure the defect density and defect distribution. Another problem is that the defect distribution and the number of defects must inconveniently be measured and counted manually from pictures, e.g. photographs, obtained.

In view of the problems with the prior art technique described above, the present invention has for its object to provide a method and apparatus for measuring the defect distribution in a crystal, which satisfy all the following requirements when measuring the defect density and defect distribution in an object such as a crystal:

(1) The method and apparatus can effect the measurement without destruction of the crystal;
(2) they can provide observing the object three-dimensionally;
(3) they are respectively highly safe ones;
(4) they are expedient to practise or operate; and
(5) they can automatically measure quantitatively the defect distribution.

The object of the present invention is achieved by providing a method of the first type mentioned in the beginning, which is characterized in that the method further comprises

converting the image data into binary image data by the use of a threshold value to obtain images of defects to be counted;

subjecting the binary image data to a contraction processing to separate one by one the defect images;

assigning to the contracted image data a plurality of regions in the direction perpendicular to the flat surface and different from each other in distance from the flat surface;

determining the defect density of each region by counting the number of the contracted images of the defects contained in the region; and

determining a depth from the flat surface within which the obtained defect densities are less than a predetermined value and regarding the depth as the Denuded Zone (DZ) width, i.e. defect free layer of the wafer.

Furthermore, the above object is obtained by a method of the first type mentioned in the beginning, which is characterized in that the method further comprises

obtaining an intensity distribution of the image data on a line perpendicular to the flat surface as intensities varying at intervals of a predetermined distance along the line;

determing a depth from the flat surface within which the intensities of the intensity distribution are less than a predetermined value and regarding the depth as the Denuded Zone (DZ) width, i.e. defect free layer of the wafer.

Moreover, in accordance with the present invention, there is provided an apparatus of the type mentioned in the beginning, which is characterized in that said apparatus further comprises

a detection means for detecting the position of the flat surface in the direction perpendicular thereto, the detected position being used by the control means for precisely controlling the position of the wafer in the direction perpendicular to the flat surface; and

an image processing means which performs the following steps:

converting the image data stored in the memory into binary image data by the use of a threshold value to obtain images of defects to be counted, subjecting the binary image data to a contraction processing to separate one by one the defect images,

assigning to the contracted image data a plurality of regions in the direction perpendicular to the flat surface and different from each other in distance from the flat surface,

determining the defect density of each region by counting the number of the contracted images of the defects contained in the region, and

determining a depth from the flat surface within which the obtained defect densities are less than a predetermined value.

Also the invention provides a method of the second type mentioned in the beginning, i.e. a method of automatically obtaining the distribution of defect sizes in a semiconductor wafer having a flat surface, which is characterized by comprising:

introducing a narrowed laser beam into the wafer through the flat surface along a direction perpendicular to said surface and scanning the laser beam along a desired cross-section to be inspected;

forming images by focusing the scattered light of the laser beam during the scanning;

photoelectrically converting the formed images into electrical signals of various intensities;

converting the electrical signals into digital data and storing them into a memory of a computer as the image data of the cross-section;

converting the image data stored in the memory into binary image data by the use of a threshold value to obtain images of defects to be counted;

subjecting the binary image data to a contraction processing to separate one by one the defect images;

assigning to the contracted image data a plurality of regions in the direction perpendicular to the flat surface and at intervals of a predetermined distance along said direction;

determining the defect density of each region by counting the number of the contracted images of the defects contained in the region;

obtaining an intensity distribution of the image data stored in the memory and on a line perpendicular to the flat surface as intensities varying at said intervals; and

computing the comparative average diameters of the defects of each region on the basis of the defect density of the region and the intensity of the intensity distribution corresponding thereto in depth from the flat surface and on assumption that every defect is spherical.

Finally, the invention provides a method of the third type mentioned in the beginning, i.e. a method of automatically obtaining the distribution of defect volume in a semiconductor wafer having a flat surface, which is characterized by comprising:

introducing a narrowed laser beam into the wafer through the flat surface along a direction perpendicular to said surface and scanning the laser beam along a desired cross-section to be inspected;

forming images by focusing the scattered light of the laser beam during the scanning;

photoelectrically converting the formed images into electrical signals of various intensities;

converting the electrical signals into digital data and storing them into a memory of a computer as the image data of the cross-section;

converting the image data stored in the memory into binary image data by the use of a threshold value to obtain images of defects to be counted;

subjecting the binary image data to a contraction processing to separate one by one the defect images;

assigning to the contracted image data a plurality of regions in the direction perpendicular to the flat surface and different from each other in distance from the flat surface;

determining the defect density of each region by counting the number of the contracted images of the defects contained in the region;

obtaining an intensity distribution of the image data stored in the memory and on a line perpendicular to the flat surface as intensities varying at said intervals; and

computing the comparative total volume of the defects of each region on the basis of the defect density of the region and the intensity of the intensity distribution corresponding thereto in depth from the flat surface and on assumption that every defect is spherical.

In the above first mentioned method of the invention scattering lights generated from the laser beam at the defect portions inside the object are received by a television camera or the like to obtain image information, and the defect density as well as defect distribution inside the object is automatically measured or found from the image information.

In the method and apparatus for measuring the defect distribution in accordance with the present invention, a narrowed laser beam is radiated into an object to be observed, scattering lights from the defect portions of the object are received by a photoelectric conversion element such as a television camera, and the defect density is measured on the basis of the output image data of the photoelectric conversion element.

More particularly, a narrowed laser beam is radiated to a crystal (object), scattering lights from the defect portions of the crystal are received by a television camera or the like, its output is subjected to A/D (analog-to-digital) conversion by an image processor and its image data are stored in the memory device of a computer. These procedures can be carried out while scanning the laser beam or moving a sample stage, to obtain image data of defects on one section of the object. The number of defects is found from the image data by an image processor having a processing function of binary image data. Since the number of defects thus found corresponds to the number of defects inside the laser beam diameter, the defect density per unit volume can be determined by dividing the number of defects per unit area of the image by the laser beam diameter.

The laser beam source to be used here must emit a laser beam having a wavelength that transmits through the object crystal. If the object is Si or GaAs crystal, it is effective to use a YAG laser having a wavelength of 1.064 micron meter. The photoelectric conversion element used here must be able to detect this laser beam. A CCD (Charge-Coupled Device) and a silicon vidicon are effective for the YAG laser.

Moreover, the present invention provides a method of measuring a distribution of a defect size comprising the steps of

(a) measuring a defect density and a scattering intensity on the basis of the scattering image to obtain the scattering intensity per one defect particle inside a crystal;

(b) measuring a radius of the defect particle on the basis of the thus obtained scattering intensity per one defect particle inside the crystal; and

(c) measuring the radius of the defect particle as a function of the depth from the surface on the basis of the defect density profile and the scattering intensity profile.

Finally, the invention provides a method of measuring a distribution of a total volume of precipitates comprising the steps of

(a) measuring a defect density and a scattering intensity on the basis of the scattering image to obtain the scattering intensity per one defect particle inside a crystal;

(b) measuring a radius of the defect particle on the basis of the thus obtained scattering intensity per one defect particle inside the crystal; and

(c) measuring a total volume of precipitates as a function of the depth from the surface on the basis of the defect density profile and the particle radius profile.

BRIEF DESCRIPTION OF THE DRAWINGS

Fig. 1 is a block diagram showing one embodiment of an apparatus for measuring automatically a defect density by scattering light in accordance with the present invention;

Fig. 2 is a schematic view showing the defect image in a Si crystal and the defect density distribution in the direction of depth from the surface of the Si crystal;

Fig. 3(a) is a photograph showing a crystal structure inside the Si crystal as a scattering light image, the image being obtained by a scattering light method;

Fig. 3(b) is a diagram showing the scattering intensity distribution in the Si crystal;

Fig. 4 is a schematic view showing the defect image in the Si crystal and the defect density distribution in the direction of depth from the surface;

Fig. 5 is an exemplary diagram showing the defect density distribution obtained by the scattering light image;

Fig. 6 is a schematic view showing how to obtain a tomogram image (scattering light image);

Fig. 7 is a flow chart showing a sequence of procedures for the measurement of a DZ width and a defect density distribution;

Fig. 8 is a structural view of the principal portions of an automatic measuring apparatus for receiving scattering lights from defects in a crystal by a line sensor and pulsing them to obtain the defect density distribution in the crystal;

Fig. 9 is a diagram showing the scattering intensity per defect particle;

Fig. 10 is a diagram showing the average diameter of precipitates; and

Fig. 11 is a diagram showing the total volume of precipitates.

DESCRIPTION OF THE PREFERRED EMBODIMENTS

Example

An Example of the present invention will hereinafter be described with reference to the accompanying drawings.

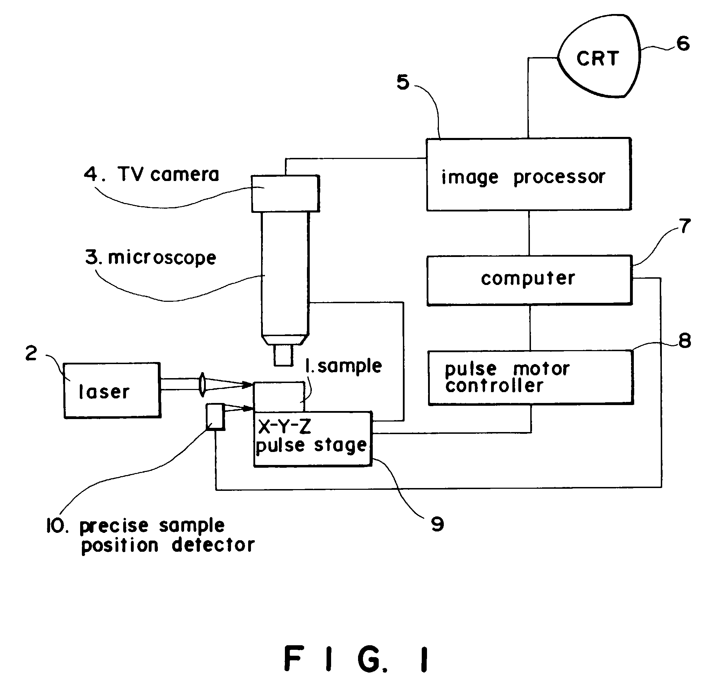

Fig. 1 is a block diagram showing the construction bf an apparatus of automatically measuring the defect density in an object by use of a method of analyzing the object by use of scattering lights in accordance with one embodiment of the present invention. In the drawing, reference numeral 1 represents a sample (object to be observed) whose defect distribution is to be measured; 2 is a laser generator for generating a laser beam to be radiated to the sample 1; 3 is a microscope equipped with an auto-focus mechanism; 4 is a television camera for converting received scattering lights to electrical signals; and 5 is an image processor for receiving the electrical signals from the television camera and making image-processing. This image processor 5 has a function of processing binary image data. Reference numeral 6 represents a CRT (Cathode-Ray Tube) for outputting the image data as they are or defect density values, etc., obtained as a result of various calculations; 7 is a computer for controlling the system as a whole when measurement is made; 8 is a pulse motor controller; 9 is an X - Y - Z pulse stage which is driven in X-, Y-, Z-directions in accordance with the instruction of the pulse motor controller 8; and 10 is a precise sample position detector for detecting precisely the position of the sample 1.

Hereinafter, measurement of the distribution of very small defects inside an Si wafer by use of the present apparatus will be described.

In the manufacture of semiconductor elements, the defect density distribution and DZ (Denuded Zone) width of a Si wafer are usually measured. They are measured with the apparatus shown in Fig. 1 by carrying out image-processing of scattering images obtained by said light scattering method.

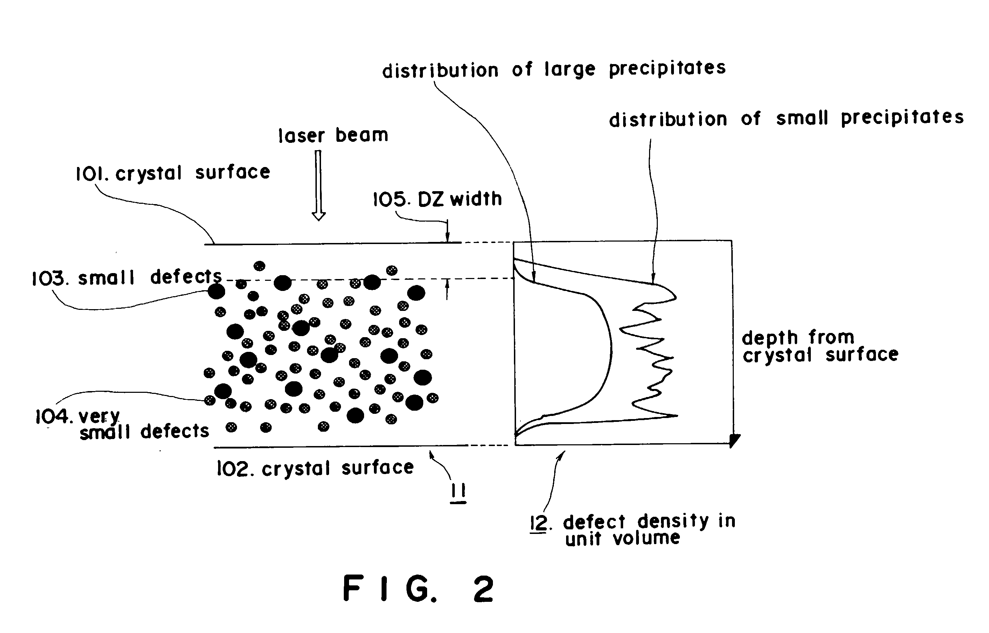

Reference numeral 11 in Fig. 2 represents schematically scattering light images which are obtained by placing a half-cleaved Si wafer as the sample 1 on the pulse stage 9 in the apparatus shown in Fig. 1, radiating a laser beam to the Si wafer and observing- scattering light images through the microscope 3 from the cleavage plane side of the Si wafer. Reference numerals 101 and 102 represent the crystal surfaces of the Si wafer, and reference numerals 103 and 104 represent small defects having various sizes inside the Si wafer. The distribution of the defects (precipitates) along the depth from the surface of the crystal, which distribution is represented by reference numeral 12 in Fig. 2, can be known on the basis of such scattering light images. Reference numeral 105 represents a width, or so-called "DZ width", from the crystal surface 101 to a depth at which the defect density exceeds a predetermined value. The measurement of this DZ width is carried out by any one of the following two methods: (1) a method for measuring the DZ width on the basis of the distribution of scattering intensity in the direction of depth from the crystal surface (the distribution being one-dimensional distribution), and (2) a method of measuring the defect density in a unit volume along the depth from the crystal surface by conducting image processing on the basis of the scattering light image data.

In said measuring method (1), the accurate position of the surface of the Si wafer (sample 1) must be known. Therefore, the position of the wafer surface is adjusted or monitored by use of the precise sample position detector 10 shown in Fig. 1. This is carried out by allowing the computer 7 to input position data from the precise sample position detector 10 and driving the X - Y - Z pulse stage 9 by the pulse motor controller 8 on the basis bf this input. Next, the position of the sample stage 9 in the Z direction (perpendicular to the sheet of drawing) is adjusted by the auto-focus mechanism of the microscope 3 in order to always keep constant the position relation from the cleavage plane (the observation plane by the microscope 3) to the position at which the laser beam is incident. The sample 1 is then moved for scanning to obtain scattering light images.

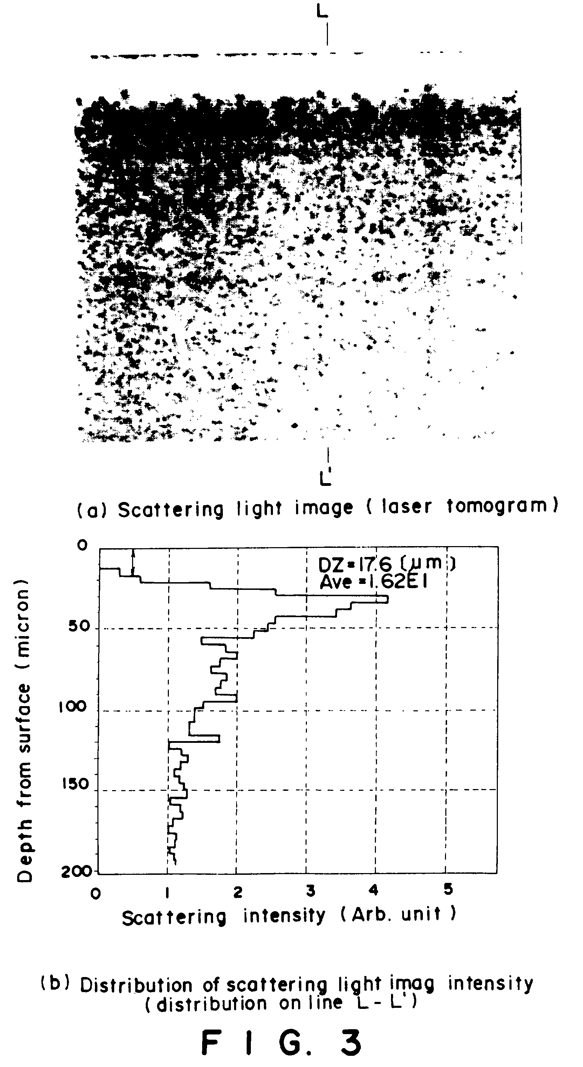

Fig. 3(a) shows scattering light images thus obtained, and is a photograph showing the crystal structure of the Si wafer. The intensity distribution in the direction of depth of the crystal is obtained from scattering light images as shown in Fig. 3(b). This Fig. 3(b) is a diagram representing the intensity distribution on line L - L' of the scattering light images obtained in Fig. 3(a). On the basis of such an intensity distribution, the DZ width 105 is defined as the distance from the surface of the crystal to the position at which the scattering intensity is a predetermined value. In this Example, the predetermined value is set to be 30% of the average scattering intensity inside the crystal, but, in place of this value, an appropriate other value can be set separately. Since the scattering intensity distribution changes greatly from position to position at which measurement is made, the DZ width is measured at several positions and the values obtained are averaged to obtain a suitable DZ width.

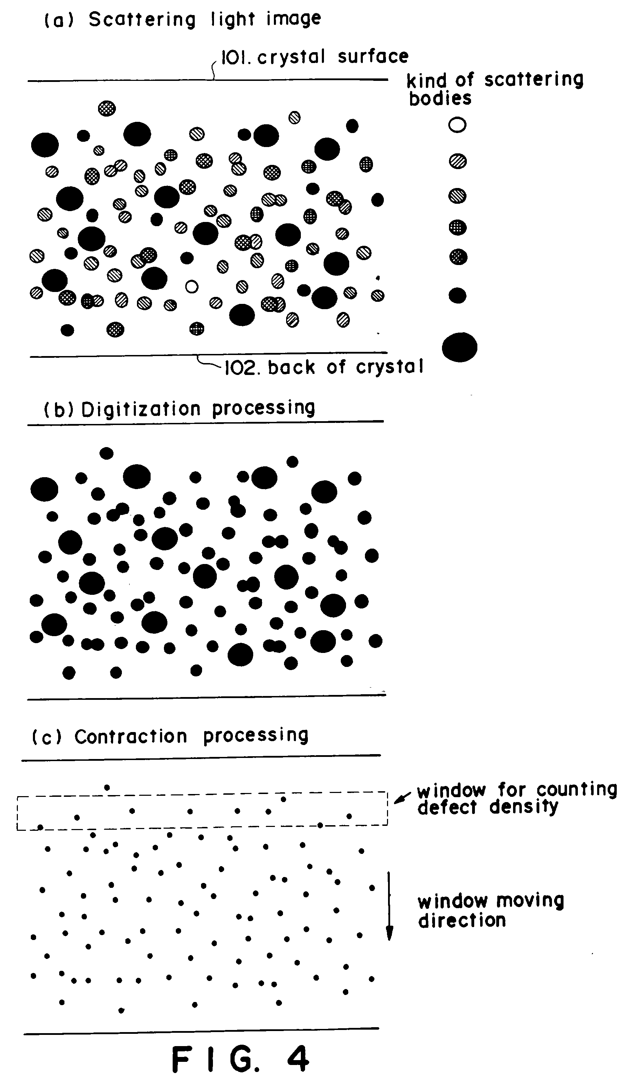

Next, the method of measuring the defect density distribution by conducting image processing on the basis of the scattering light image data will be described. Among the scattering light image data, there are those which indicate various defects (precipitates) having different scattering intensities as shown in Fig. 4(a). Therefore, the scattering intensity of each pixel of the image data is digitized by a predetermined threshold value to obtain binary image data such as shown in Fig. 4(b). The data are then subjected to contraction processing (refer, for example, to Hideyuki Tamura, "Introduction To Computer Image Processing", Soken Shuppan, p. 80) in order to separate one by one the precipitates (defects) as shown in Fig. 4(c). The predetermined threshold value is such that it can remove noise of the television camera 4 and the defect density to be measured will be the maximum one.

Then, as represented by dash lines shown in Fig. 4 (c), a window for counting the defect density having a sufficiently smaller width than the DZ width is set in the binary image data subjected to the contraction processing. The number of defects is counted while moving this window so as to obtain the distribution diagrams (see the diagram 12 in Fig. 2) of the defect density from the front surface to the back of the wafer. The DZ width is defined as the depth from the crystal surface to the position at which the defect density reaches a predetermined value. In this embodiment, this predetermined value is set such that the defect density is 30% of the average defect density inside the crystal, but an appropriate other value can be set separately, besides the predetermined value described above.

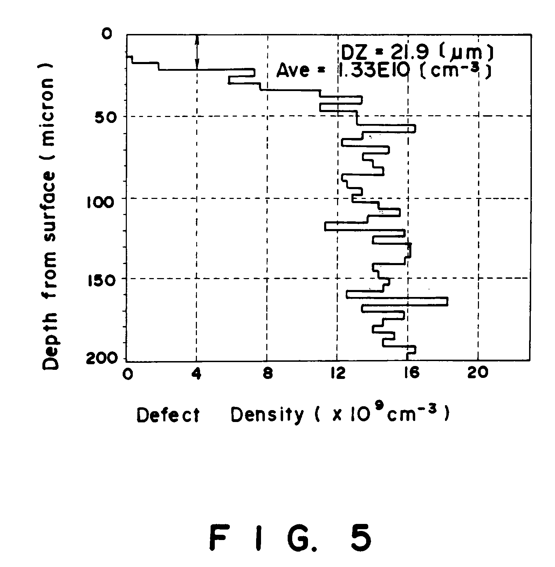

Fig. 5 is a diagram showing a defect density distribution obtained by the scattering light images.

Further, if two or more kinds of scattering bodies (defects) exist, the kinds are judged by changing the threshold value described above or effecting pattern recognition of the scattering bodies (refer to the aforementioned reference "Introduction To Computer Image Processing", page 85) in order to measure the density distribution and DZ width of each of the kinds of scattering bodies as shown in Fig. 2.

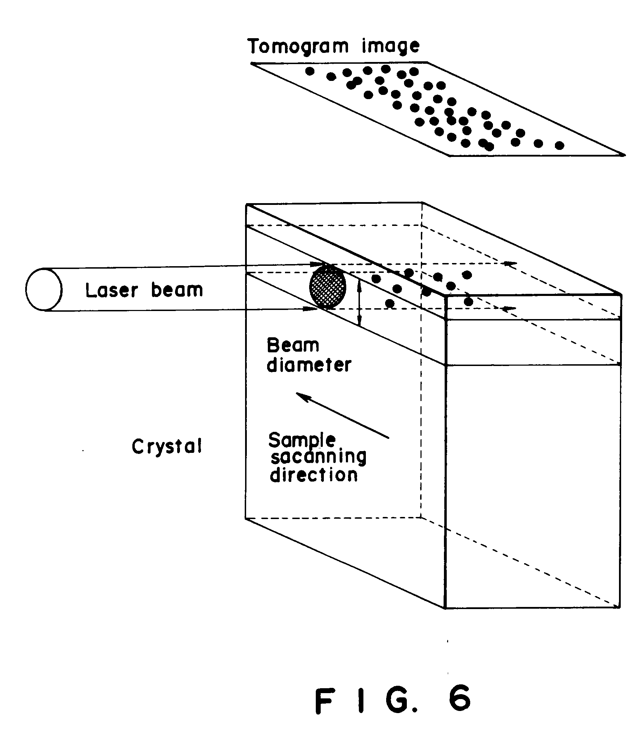

Fig. 6 is a schematic view showing how the tomogram images (scattering light images) are obtained.

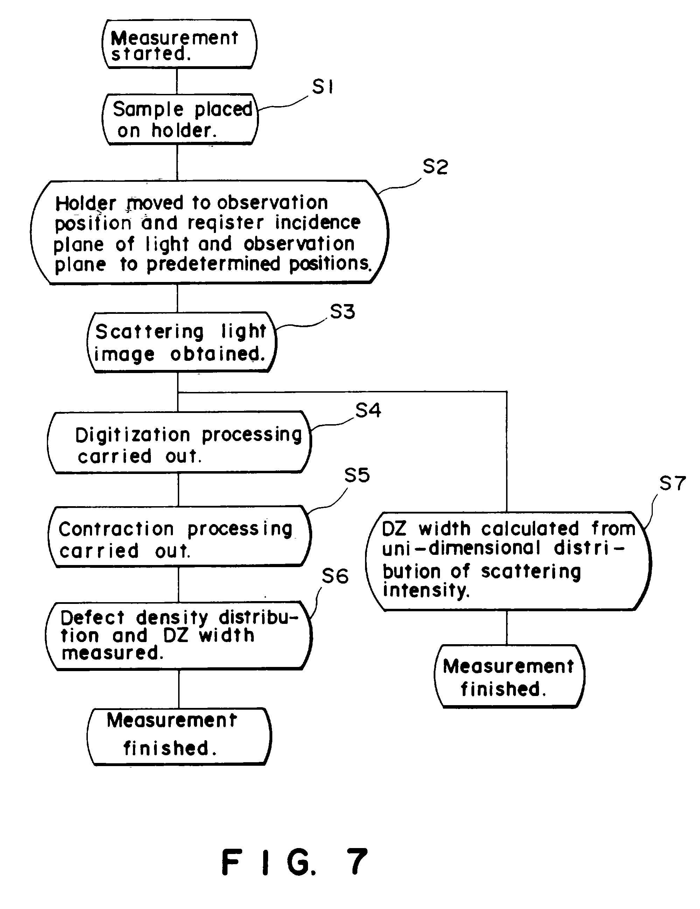

The procedures for obtaining the defect density distribution such as represented by reference numeral 12 in Fig. 2 will hereinafter be explained with reference to the flow chart of Fig. 7.

First of all, the sample 1 to be measured is placed on the X - Y - Z pulse stage 9 in the step S1. The sample 1 is then moved to the observation position in the step S2, and the place of incidence of the laser beam as well as the observation plane by the microscope 3 is adjusted to each of predetermined positions. The pulse stage 9 is driven in the step S3 to move the sample 1 for scanning and to obtain scattering light images. Thereafter, if there is employed a measuring method based on the distribution of scattering intensity in the direction of depth from the surface of the crystal, the flow proceeds to the step S7, and if there is employed a method of obtaining the defect density distribution by image processing on the basis of the scattering light image data, the flow proceeds to the step S4.

The digitization processing described above is made for the image data by the scattering lights in the step S4, and contraction processing is further carried out in the step S5. The defect density distribution and the DZ width are obtained in the step S6.

On the other hand, the DZ width is found from the one-dimensional distribution of the scattering intensity in the step S7.

The measurement is thus completed.

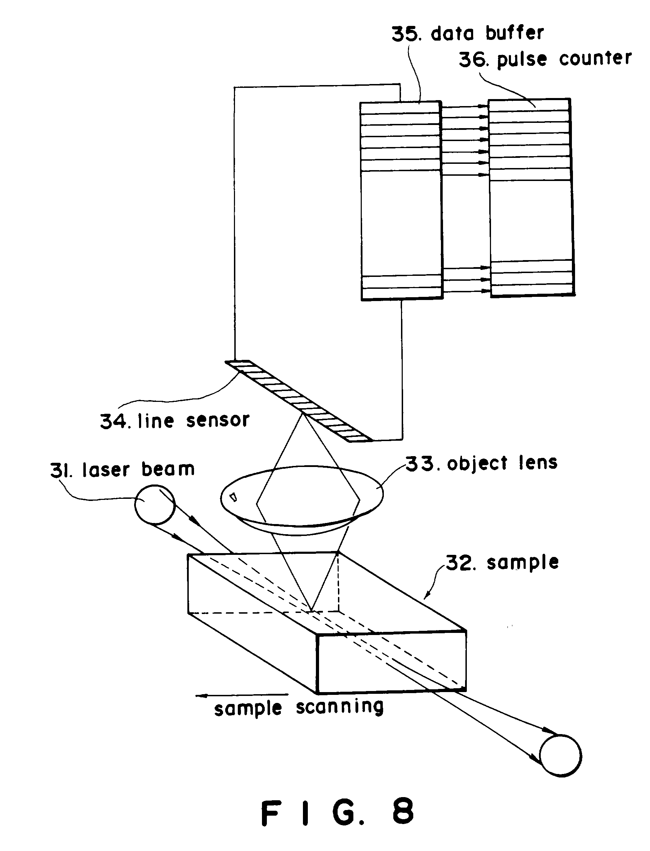

Fig. 8 shows the essential components of an alternative apparatus for automatically measuring the defect density distribution according to the invention.

In the apparatus shown in the drawing, the laser beam 31 is radiated into the sample 32 as the object to be observed, and the scattering lights from the defects are received by a one-dimensional photoelectric detector such as a line sensor 34 or two-dimensional photoelectric detector through an object lens 33. The sample 32 is moved for scanning in the direction represented by arrow to obtain an electrical output at each position of the line sensor 34. If any defects pass through the laser beam flux, the scattering lights from the defects are incident into the line sensor 34 to generate pluses. Therefore, the electrical output at each position is stored in a date buffer 35 and the pulse at each point is counted by a pulse counter 36. In this manner, the distribution of the defect density of the sample 32 can be determined.

The objects to be observed may be single-crystal oxides, single-crystal semiconductors, glass such as optical fibers and other material through which the laser beam can pass.

According to the present invention, it is possible to measure the defect density (n) and the scattering intensity (I) of the scattering light from the defect portions inside a crystal. The scattering intensity (I) is expressed by the following formula.

The scattering intensity (I) = the number of the defects (n)

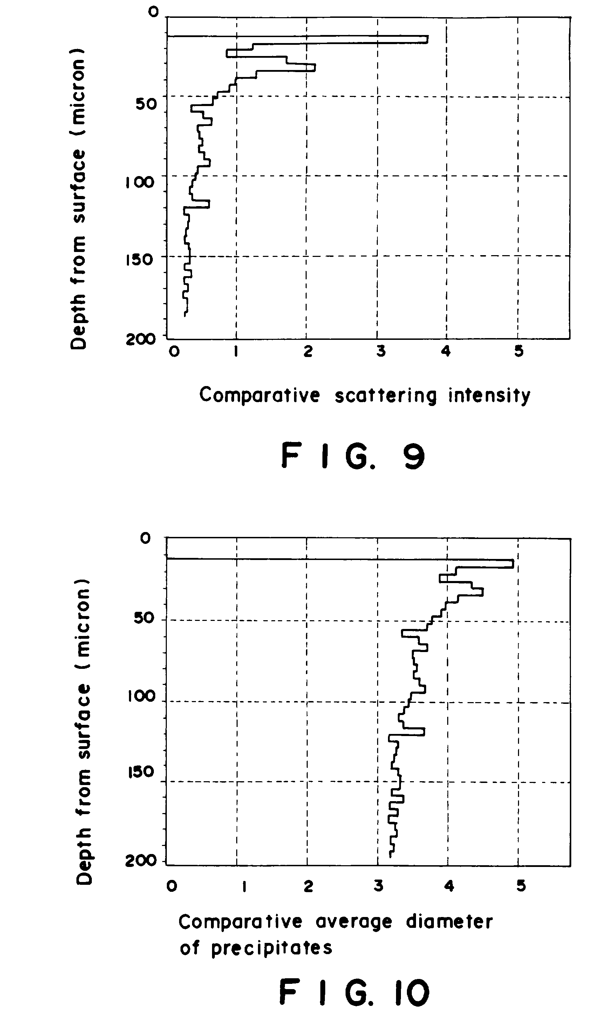

x the scattering intensity per defect particle (i) Therefore, it is possible to compute the scattering intensity per defect particle (i). Fig. 9 is a diagram showing the scattering intensity per defect particle as a function of distance (or depth) from the surface of a crystal.

Further, when the defect particle is small in size as compared with the wavelength of the light impinging upon the crystal, the scattering intensity per defect particle (i) is proportioned to the square of the volume of the defect particle.

The scattering intensity per defect particle (i) is

$\propto$ (the volume of the particle (v))$^2$ and
$\propto$ (the radius of the particle (d))$^6$.

Therefore, it is possible to compute the volume of the particle (v) and the radius of the particle (d) on the assumption that the particle is spherical. Fig. 10 is a diagram showing an average diameter of precipitates (defect particles) as a function of distance from the surface of the crystal.

Furthermore, the total volume of precipitates is expressed by the following formula:

The total volume of precipitates (V) = The volume of unit defect particle (v)

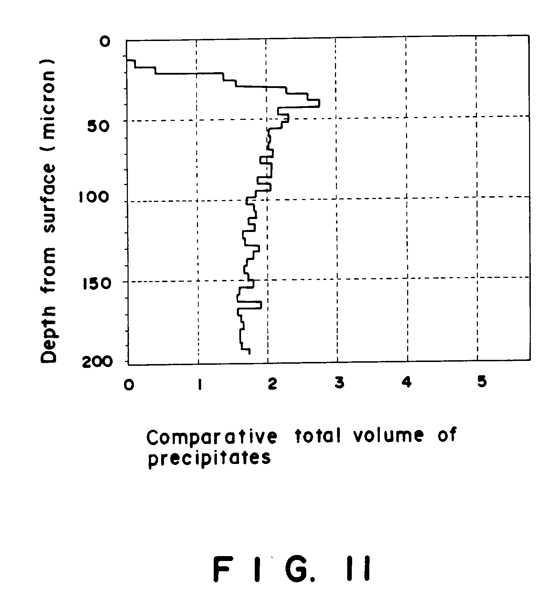

X the number of the defect particles (n) Therefore, it is also possible to compute the total volume of precipitates (V). Fig. 11 is a diagram showing the total volume of precipitates as a function of depth from the surface of the crystal.

As described above, the present invention renders it possible to make image-processing of the images formed due to the scattering lights and determine the defect distribution in the object to be observed. Therefore, the invention enables the defects in the object to be observed three-dimensionally without the destruction of the object. Furthermore, the present invention neither require toxic liquids nor produce toxic gases unlike the etching method and is therefore highly safe. Since the present invention makes it possible to measure the defects of an object without the destruction thereof, the change of the defects which may be caused by repeatedly annealing the object can be observed and measured.

Measurement of very small defects inside the Si crystal is very important from the viewpoint of device process, and the present invention which is highly safe, non-destructive and highly reliable is extremely effective for such measurement. In addition, when the measurement is made, pre-treatment such as etching of the object to be observed is not necessary and a conventional visually measuring time for which several minutes of time has been necessary per unit area observation by eyes can now be reduced to several seconds according to the present invention.

## Claims

1. A method of automatically determining the defect density and defect distribution in a semiconductor wafer having a flat surface using laser scattering tomography, the method comprises

   Introducing a narrowed laser beam into the wafer (1) through the flat surface along a direction perpendicular to said surface and scanning the laser beam along a desired cross-section to be inspected;
   forming images by focusing the scattered light of the laser beam during the scanning;
   photoelectrically converting the formed images into electrical signals of various intensities; and converting the electrical signals into digital data and storing them into a memory of a computer as the image data of the cross-section, characterized in that the method further comprises
   converting the image data into binary image data by the use of a threshold value to obtain images of defects to be counted;
   subjecting the binary image data to a contraction processing to separate one by one the defect images;
   assigning to the contracted image data a plurality of regions in the direction perpendicular to the flat surface and different from each other in distance from the flat surface;
   determining the defect density of each region by counting the number of the contracted images of the defects contained in the region; and determining a depth from the flat surface within which the obtained defect densities are less than a predetermined value and regarding the depth as the Denuded Zone (DZ) width, i.e. defect free layer of the wafer.

2. A method of automatically determining the defect distribution in a semiconductor wafer having a flat surface using laser scattering tomography, the method comprises

   introducing a narrowed laser beam into the wafer (1) through the flat surface along a direction perpendicular to said surface and scanning the laser beam along a desired cross-section to be inspected;
   forming images by focusing the scattered light of the laser beam during the scanning;
   photoelectrically converting the formed images into electrical signals of various intensities; and converting the electrical signals into digital data and storing them into a memory of a computer as the image data of the cross-section, characterized in that the method further comprises
   obtaining an intensity distribution of the image data on a line perpendicular to the flat surface as intensities varying at intervals of a predetermined distance along the line;
   determining a depth from the flat surface within which the intensities of the intensity distribution are less than a predetermined value and regarding the depth as the Denuded Zone (DZ) width, i.e. defect free layer of the wafer.

3. An apparatus for laser scattering tomography for automatically determining the defect density and defect distribution in a semiconductor wafer having a flat surface, comprising:

   a means (2) for generating a narrowed laser beam;
   a positioning means (9) for varying the position of the wafer relative to the laser beam;
   a control means (7, 8) for controlling the positioning means such that the laser beam (31) is introduced into the wafer through the flat surface and the laser beam is scanned along a desired cross-section of the wafer to be inspected;
   an optical means (3) for forming images by focusing the scattered light of the laser beam during the scanning of the laser beam;
   a photoelectric conversion means (4) for converting the images formed by the optical means into electrical signals of various intensities;
   an analog-to-digital conversion means (5) for converting the electrical signals into digital data; and
   a computer (7) for storing the digital data in a memory thereof as the image data of the cross-section,

characterized in that the apparatus further comprises

a detection means (10) for detecting the position of the flat surface in the direction perpendicular thereto, the detected position being used by the control means (7, 8) for precisely controlling the position of the wafer in the direction perpendicular to the flat surface; and

an image processing means (5) which performs the following steps:

converting the image data stored in the memory into binary image data by the use of a threshold value to obtain images of defects to be counted, subjecting the binary image data to a contraction processing to separate one by one the defect images,

assigning to the contracted image data a plurality of regions in the direction perpendicular to the flat surface and different from each other in distance from the flat surface,

determining the defect density of each region by counting the number of the contracted images of the defects contained in the region, and determining a depth from the flat surface within which the obtained defect densities are less than a predetermined value.

4.  A method of automatically obtaining the distribution of defect sizes in a semiconductor wafer having a flat surface, characterized by comprising:

introducing a narrowed laser beam into the wafer (1) through the flat surface along a direction perpendicular to said surface and scanning the laser beam along a desired cross-section to be inspected;

forming images by focusing the scattered light of the laser beam during the scanning;

photoelectrically converting the formed images into electrical signals of various intensities;

converting the electrical signals into digital data and storing them into a memory of a computer as the image data of the cross-section;

converting the image data stored in the memory into binary image data by the use of a threshold value to obtain images of defects to be counted;

subjecting the binary image data to a contraction processing to separate one by one the defect images;

assigning to the contracted image data a plurality of regions in the direction perpendicular to the flat surface and at intervals of a predetermined distance along said direction;

determining the defect density of each region by counting the number of the contracted images of the defects contained in the region;

obtaining an intensity distribution of the image data stored in the memory and on a line perpendicular to the flat surface as intensities varying at said intervals; and

computing the comparative average diameters of the defects of each region on the basis of the defect density of the region and the intensity of the intensity distribution corresponding thereto in depth from the flat surface and on assumption that every defect is spherical.

5.  A method of automatically obtaining the distribution of defect volume in a semiconductor wafer having a flat surface, characterized by comprising:

introducing a narrowed laser beam into the wafer (1) through the flat surface along a direction perpendicular to said surface and scanning the laser beam along a desired cross-section to be inspected;

forming images by focusing the scattered light of the laser beam during the scanning;

photoelectrically converting the formed images into electrical signals of various intensities;

converting the electrical signals into digital data and storing them into a memory of a computer as the image data of the cross-section;

converting the image data stored in the memory into binary image data by the use of a threshold value to obtain images of defects to be counted;

subjecting the binary image data to a contraction processing to separate one by one the defect images;

assigning to the contracted image data a plurality of regions in the direction perpendicular to the flat surface and different from each other in distance from the flat surface;

determining the defect density of each region by counting the number of the contracted images of the defects contained in the region;

obtaining an intensity distribution of the image data stored in the memory and on a line perpendicular to the flat surface as intensities varying at said intervals; and

computing the comparative total volume of the defects of each region on the basis of the defect density of the region and the intensity of the intensity distribution corresponding thereto in depth from the flat surface and on assumption that every defect is spherical.

**Patentansprüche**

1.  Verfahren zum automatischen Bestimmen der Fehler- bzw. Defektdichte und der Fehler- bzw. Defektverteilung in einer Halbleiterwafer, die eine flache Oberfläche hat, unter Benutzung der Laserstreuungstomographie, wobei das Verfahren folgendes umfaßt:

Einführen eines verengten bzw. begrenzten Laserbündels in die Wafer (1) durch die flache Oberfläche längs einer zu der Oberfläche senkrechten Richtung und Abtasten mit dem Laserbündel längs eines zu inspizierenden gewünschten Querschnitts;

Bilden von Bildern durch Fokussieren des gestreuten Lichts des Laserbündels während des Abtastens;

photoelektrisches Umwandeln der gebildeten Bilder in elektrische Signale von verschiedenen bzw. variierenden Intensitäten; und

Umwandeln der elektrischen Signale in digitale Daten und Speichern derselben in einem Speicher eines Computers als die Bilddaten des Querschnitts,

dadurch **gekennzeichnet,** daß das Verfahren weiter folgendes umfaßt

Umwandeln der Bilddaten in binäre Bilddaten unter Verwendung eines Schwellwerts, um Bilder der zu zählenden Fehler bzw. Defekte zu erhalten;

Unterwerfen der binären Bilddaten einer Kontraktions- bzw. Zusammenziehungsverarbeitung, um die Fehler- bzw. Defektbilder eins um das andere zu separieren;

Zuordnen zu den kontraktierten bzw. zusammengezogenen Bilddaten eine Mehrzahl von Bereichen in der Richtung, die senkrecht zu der flachen Oberfläche ist, und die unterschiedlich voneinander im Abstand von der flachen Oberfläche sind;

Bestimmen der Fehler- bzw. Defektdichte von jedem Bereich durch Zählen der Anzahl der kontraktierten bzw. zusammengezogenen Bilder der Fehler bzw. Defekte, die in dem Bereich enthalten sind; und

Bestimmen einer Tiefe von der flachen Oberfläche aus innerhalb welcher die erhaltenen Fehler- bzw. Defektdichten geringer als ein vorbestimmter Wert sind, und Betrachten der Tiefe als die Breite der Denudierten Zone (DZ), d.h. der defektfreien Schicht der Wafer.

2. Verfahren zum automatischen Bestimmen der Fehler- bzw. Defektverteilung in einer Halbleiterwafer, die eine flache Oberfläche hat, unter Benutzung der Laserstreuungstomographie, wobei das Verfahren folgendes umfaßt

Einleiten eines verengten bzw. begrenzten Laserbündels in die Wafer (1) durch die flache Oberfläche längs einer Richtung, die senkrecht zu der Oberfläche ist, und Abtasten mit dem Laserbündel längs eines gewünschten zu inspizierenden Querschnitts;

Bilden von Bildern durch Fokussieren des Streulichts des Laserbündels während des Abtastens;

photoelektrisches Umwandeln der gebildeten Bilder in elektrische Signale von verschiedenen bzw. variierenden Intensitäten; und

Umwandeln der elektrischen Signale in digitale Daten und Speichern derselben in einem Speicher eines Computers als die Bilddaten des Querschnitts;

dadurch **gekennzeichnet,** daß das Verfahren weiter folgendes umfaßt

Erhalten einer Intensitätsverteilung der Bilddaten auf einer Linie bzw. Zeile, die senkrecht zu der flachen Oberfläche ist, als Intensitäten, welche in Intervallen einer vorbestimmten Strecke längs der Linie bzw. Zeile variieren;

Bestimmen einer Tiefe von der flachen Oberfläche aus, innerhalb welcher die Intensitäten der Intensitätsverteilung geringer sind als ein vorbestimmter Wert und Betrachten der Tiefe als die Breite der Denudierten Zone (DZ), d.h. der defektfreien Schicht der Wafer.

3. Einrichtung für die Laserstreuungstomographie zum automatischen Bestimmen der Fehler- bzw. Defektdichte und Fehler-bzw. Defektverteilung in einer Halbleiterwafer, die eine flache Oberfläche hat, umfassend:

ein Mittel (2) zum Erzeugen eines verengten bzw. begrenzten Laserbündels;

ein Positionierungsmittel (9) zum Variieren der Position der Wafer relativ zu dem Laserbündel;

ein Steuer- bzw. Regelmittel (7, 8) zum Steuern bzw. Regeln des Positionierungsmittels derart, daß das Laserbündel (31) durch die flache Oberfläche in die Wafer eingeleitet wird und mit dem Laserbündel längs eines gewünschten Querschnitts der zu inspizierenden Wafer abgetastet wird;

ein optisches Mittel (3) zum Bilden von Bildern durch Fokussieren des Streulichts des Laserbündels während des Abtastens mit dem Laserbündel;

ein photoelektrisches Umwandlungsmittel (4) zum Umwandeln der durch das optische Mittel gebildeten Bilder in elektrische Signale von verschiedenen bzw. variierenden Intensitäten;

ein Analog-zu-digital-Umwandlungsmittel (5) zum Umwandeln der elektrischen Signale in digitale Daten; und

einen Computer (7) zum Speichern der digitalen Daten in einem Speicher desselben als die Bilddaten des Querschnitts,

dadurch **gekennzeichnet,** daß die Einrichtung weiter folgendes umfaßt

ein Detektionsmittel (10) zum Detektieren der Position der flachen Oberfläche in der Richtung, die senkrecht dazu ist, wobei die detektierte Position von dem Steuer- bzw. Regelmittel (7, 8) zum genauen Steuern bzw. Regeln der Position der Wafer in der zu der flachen Oberfläche senkrechten Richtung verwendet wird; und

ein Bildverarbeitungsmittel (5), das die folgenden Schritte ausführt:

Umwandeln der in dem Speicher gespeicherten Bilddaten in binäre Bilddaten unter Verwendung eines Schwellwerts, um Bilder der zu zählenden Fehler bzw. Defekte zu erhalten,

Unterwerfen der binären Bilddaten einer Kontraktions- bzw. Zusammenziehungsverarbeitung, um die Fehler- bzw. Defektbilder eines um das andere zu separieren,

Zuordnen zu den kontraktierten bzw. zusammengezogenen Bilddaten eine Mehrzahl von Bereichen in der Richtung, die senkrecht zu der flachen Oberfläche ist, und welche im Abstand von der flachen Oberfläche unterschiedlich voneinander sind,

Bestimmen der Fehler- bzw. Defektdichte von jedem Bereich durch Zählen der Anzahl der kontraktierten bzw. zusammengezogenen Bilder der in dem Bereich enthaltenen Fehler bzw. Defekte, und

Bestimmen einer Tiefe von der flachen Oberfläche aus, innerhalb welcher die erhaltenen Fehler- bzw. Defektdichten geringer als ein vorbestimmter Wert sind.

4. Verfahren zum automatischen Erhalten der Verteilung der Fehler- bzw. Defektgrößen in einer Halbleiterwafer, die eine flache Oberfläche hat, dadurch **gekennzeichnet,** daß es folgendes umfaßt:

Einführen eines verengten bzw. begrenzten Laserbündels in die Wafer (1) durch die flache Oberfläche längs einer Richtung, die senkrecht zu der Oberfläche ist, und Abtasten mit dem Laserbündel längs eines gewünschten zu inspizierenden Querschnitts;

Bilden von Bildern durch Fokussieren des Streulichts von dem Laserbündel während des Abtastens;

photoelektrisches Umwandeln der gebildeten Bilder in elektrische Signale von verschiedenen bzw. variierenden Intensitäten;

Umwandeln der elektrischen Signale in digitale Daten und Speichern derselben in einem Speicher eines Computers als die Bilddaten des Querschnitts;

Umwandeln der in dem Speicher gespeicherten Bilddaten in binäre Bilddaten unter Verwendung eines Schwellwerts, um Bilder der zu zählenden Fehler bzw. Defekte zu erhalten;

Unterwerfen der binären Bilddaten einer Kontraktions- bzw. Zusammenziehungsverarbeitung, um die Fehler- bzw. Defektbilder eines um das andere zu separieren;

Zuordnen zu den kontraktierten bzw. zusammengezogenen Bilddaten eine Mehrzahl von Bereichen in der Richtung, die senkrecht zu der flachen Oberfläche ist, und in Intervallen einer vorbestimmten Strecke längs der Richtung;

Bestimmen der Fehler- bzw. Defektdichte von jedem Bereich durch Zählen der Anzahl der kontraktierten bzw. zusammengezogenen Bilder der in dem Bereich enthaltenen Fehler bzw. Defekte;

Erhalten einer Intensitätsverteilung der in dem Speicher gespeicherten Bilddaten und auf einer Linie bzw. Zeile, die senkrecht zu der flachen Oberfläche ist, als Intensitäten, die in den Intervallen variieren; und

Berechnen der vergleichenden bzw. relativen mittleren Durchmesser der Fehler bzw. Defekte von jedem Bereich auf der Basis der Fehler- bzw. Defektdichte des Bereichs und der Intensität der Intensitätsverteilung, die dem entspricht, in der Tiefe von der flachen Oberfläche aus und unter der Annahme, daß jeder Fehler bzw. Defekt sphärisch ist.

5. Verfahren zum automatischen Erhalten der Verteilung des Fehler- bzw. Defektvolumens in einer Halbleiterwafer, die eine flache Oberfläche hat, dadurch **gekennzeichnet,** daß es folgendes umfaßt:

Einführen eines verengten bzw. begrenzten Laserbündels in die Wafer (1) durch die flache Oberfläche längs einer Richtung, die senkrecht zu der Oberfläche ist, und Abtasten mit dem Laserbündel längs eines gewünschten zu inspizierenden Querschnitts;

Bilden von Bildern durch Fokussieren des Streulichts des Laserbündels während des Abtastens;

photoelektrisches Umwandeln der gebildeten Bilder in elektrische Signale von verschiedenen Intensitäten;

Umwandeln der elektrischen Signale in digitale Daten und Speichern derselben in einem Speicher eines Computers als die Bilddaten des Querschnitts;

Umwandeln der in dem Speicher gespeicherten Bilddaten in binäre Bilddaten unter Verwendung eines Schwellwerts, um Bilder der zu zählenden Fehler bzw. Defekte zu erhalten;

Unterwerfen der binären Bilddaten einer Kontraktions- bzw. Zusammenziehungsverarbeitung, um die Fehler- bzw. Defektbilder eines um das andere zu separieren;

Zuordnen zu den kontraktierten bzw. zusammengezogenen Bilddaten eine Mehrzahl von Bereichen in der Richtung, die senkrecht zu der flachen Oberfläche ist, und welche unterschiedlich voneinander in der Entfernung von der flachen Oberfläche sind;

Bestimmen der Fehler- bzw. Defektdichte von jedem Bereich durch Zählen der Anzahl der kontraktierten bzw. zusammengezogenen Bilder der in dem Bereich enthaltenen Fehler bzw. Defekte;

Erhalten einer Intensitätsverteilung der in dem Speicher gespeicherten Bilddaten und auf einer Linie bzw. Zeile, die senkrecht zu der flachen Oberfläche ist, als Intensitäten, die in den Intervallen variieren; und

Berechnen des vergleichenden bzw. relativen Gesamtvolumens der Fehler bzw. Defekte von jedem Bereich auf der Basis der Fehler- bzw. Defektdichte des Bereichs und der Intensität der Intensitätsverteilung, die dem entspricht, in der Tiefe von der flachen Oberfläche aus und unter der Annahme, daß jeder Fehler bzw. Defekt sphärisch ist.

**Revendications**

1. Méthode de détermination automatique de la densité des défauts et de la distribution des défauts dans une tranche de semiconducteur ayant une surface plane, par tomographie à dispersion laser, la méthode comprenant :

l'introduction d'un faisceau laser de section réduite dans la tranche (1) à travers la surface plane, suivant une direction perpendiculaire à ladite surface, et le balayage du faisceau laser le long d'une section transversale qu'on veut inspecter ;
la formation d'images par focalisation de la lumière dispersée du faisceau laser pendant le balayage ;
la conversion photoélectrique des images formées en signaux électriques de diverses intensités ; et
la conversion des signaux électriques en données numériques et le stockage de ces données dans une mémoire d'un ordinateur, pour constituer les données d'image de la section transversale ;
caractérisée en ce qu'elle comprend en outre :
la conversion des données d'image en données d'image binaires par utilisation d'une valeur de seuil pour obtenir des images des défauts à compter ;
la soumission des données d'image binaires à un traitement de contraction pour séparer les images de défaut, une par une ;
l'affectation aux données d'image contractées d'une pluralité de régions dans la direction perpendiculaire à la surface plane, qui diffèrent les unes des autres en distance par rapport à la surface plane ;
la détermination de la densité de défauts de chaque région par comptage du nombre des images contractées des défauts contenus dans la région ; et
la détermination d'une profondeur, par rapport à la surface plane, à l'intérieur de laquelle les densités de défauts obtenues sont inférieures à une valeur prédéterminée, et la considération de la profondeur comme étant la largeur de la Zone Dénudée (ZD),c'est-à-dire de la couche exempte de défaut de la tranche.

2. Méthode de détermination automatique de la distribution des défauts dans une tranche de semiconducteur ayant une surface plane, par tomographie à dispersion laser, la méthode comprenant :

l'introduction d'un faisceau laser à section réduite dans la tranche (1) à travers la surface plane, suivant une direction perpendiculaire à ladite surface, et le balayage du faisceau laser le long d'une section transversale qu'on veut inspecter ;
la formation d'images par focalisation de la lumière dispersée du faisceau laser pendant le balayage ;
la conversion photoélectrique des images formées en signaux électriques de diverses intensités ; et
la conversion des signaux électriques en données numériques et le stockage de ces données dans une mémoire d'un ordinateur, pour constituer les données d'image de la section transversale ;
caractérisée en ce qu'elle comprend en outre :
l'obtention d'une distribution d'intensité des données d'image sur une ligne perpendiculaire à la surface plane, comme intensités variant à intervalles d'une distance prédéterminée le long de la ligne ;
la détermination d'une profondeur, par rapport à la surface plane, à l'intérieur de laquelle les intensités de la distribution d'intensité sont inférieures à une valeur prédéterminée et la considération de la profondeur comme étant la largeur de la Zone Dénudée (ZD), c'est-à-dire de la couche exempte de défaut de la tranche.

3. Appareil de tomographie à dispersion laser pour déterminer automatiquement la densité des défauts et la distribution des défauts dans une tranche de semiconducteur ayant une surface plane, comprenant :

un dispositif (2) de génération d'un faisceau laser à section réduite ;
un dispositif de positionnement (9) pour faire varier la position de la tranche de semiconducteur par rapport au faisceau laser ;
un dispositif de commande (7,8) pour commander le dispositif de positionnement d'une manière telle que le faisceau laser (31) est introduit dans la tranche à travers la surface plane et que le faisceau laser est balayé le long d'une section transversale désirée de la tranche à inspecter ;
un dispositif optique (3) pour former des images par focalisation de la lumière dispersée du faisceau laser pendant le balayage du faisceau laser ;
un dispositif de conversion photoélectrique (4) pour convertir les images formées par le dispositif optique en signaux électriques de diverses intensités ;
un dispositif de conversion analogique/numérique (5) pour convertir les signaux électriques en données numériques ; et
un ordinateur (7) pour stocker les données numériques dans sa mémoire, comme données d'image de la section transversale ;
caractérisé en ce qu'il comprend en outre :
un dispositif de détection (10) pour détecter la position de la surface plane dans la direction perpendiculaire à cette dernière, la position détectée étant utilisée par le dispositif de commande (7,8) pour commander exactement la position de la tranche de semiconducteur dans la direction perpendiculaire à la surface plane ; et
un dispositif de traitement d'image (5) qui exécute les étapes suivantes :
conversion des données d'image stockées dans la mémoire en données d'image binaires par utilisation d'une valeur de seuil pour obtenir des images de défauts à compter ;
soumission des données d'image binaires à un traitement de contraction pour séparer les images de défaut une par une ;
affectation aux données d'image contractées d'une pluralité de régions dans la direction perpendiculaire à la surface plane qui diffèrent les unes des autres en distance par rapport à la surface plane ;
détermination de la densité de défauts de chaque région par comptage du nombre des images contractées des défauts contenus dans la région ; et
détermination d'une profondeur, par rapport à la surface plane, à l'intérieur de laquelle les densités de défauts obtenues sont inférieures à une valeur prédéterminée.

4. Méthode d'obtention automatique de la distribution des dimensions de défauts dans une tranche de semiconducteur ayant une surface plane, caractérisée en ce qu'elle comprend :

l'introduction d'un faisceau laser à section réduite dans la tranche de semiconducteur (1) à travers la surface plane, le long d'une direction perpendiculaire à ladite surface, et le balayage du faisceau laser le long d'une section transversale qu'on désire inspecter ;

la formation d'images par focalisation de la lumière dispersée du faisceau laser pendant le balayage ;

la conversion photoélectrique des images formées en signaux électriques de diverses intensités ;

la conversion des signaux électriques en données numériques et stockage de celles-ci dans une mémoire d'un ordinateur, comme données d'image de la section transversale;

la conversion des données d'image stockées dans la mémoire en données d'image binaires par utilisation d'une valeur de seuil pour obtenir des images des défauts à compter ;

la soumission des données d'image binaires à un traitement de contraction pour séparer les images de défaut une par une ;

l'affectation aux données d'image contractées d'une pluralité de régions dans la direction perpendiculaire à la surface plane et à intervalles d'une distance prédéterminée le long de la dite direction ;

la détermination de la densité de défauts de chaque région par comptage du nombre des images contractées des défauts contenus dans la région ;

l'obtention d'une distribution d'intensité des données d'image stockées dans la mémoire et sur une ligne perpendiculaire à la surface plane, comme intensités variant aux dits intervalles ; et le calcul des diamètres moyens comparatifs des défauts de chaque région sur la base de la densité de défauts de la région et de l'intensité de la distribution d'intensité correspondant à cette région en profondeur par rapport à la surface plane et dans l'hypothèse que tous les défauts sont sphériques.

5. Méthode d'obtention automatique de la distribution de volume des défauts dans une tranche de semiconducteur ayant une surface plane, caractérisée en ce qu'elle comprend :

l'introduction d'un faisceau laser à section réduite dans la tranche de semiconducteur (1) à travers la surface plane, le long d'une direction perpendiculaire à ladite surface, et le balayage du faisceau laser le long d'une section transversale qu'on désire inspecter ;

la formation d'images par focalisation de la lumière dispersée du faisceau laser pendant le balayage ;

la conversion photoélectrique des images formées en signaux électriques de diverses intensités ;

la conversion des signaux électriques en données numériques et le stockage de celles-ci dans une mémoire d'un ordinateur, comme données d'image de la section transversale ;

la conversion des données d'image stockées dans la mémoire en données d'image binaires par utilisation d'une valeur de seuil pour obtenir des images des défauts à compter ;

la soumission des données d'image binaires à un traitement de contraction pour séparer les images de défaut une par une ;

l'affectation aux données d'image contractées d'une pluralité de régions dans la direction perpendiculaire à la surface plane qui diffèrent les unes des autres en distance par rapport à la surface plane ;

la détermination de la densité de défauts de chaque région par comptage du nombre des images contractées des défauts contenus dans la région ;

l'obtention d'une distribution d'intensité des données d'image stockées dans la mémoire et sur une ligne perpendiculaire à la surface plane, comme intensités variant auxdits intervalles ; et le calcul du volume total comparatif des défauts de chaque région sur la base de la densité de défauts de la région et de l'intensité de la distribution d'intensité correspondant à cette région en profondeur par rapport à la surface plane et dans l'hypothèse que tous les défauts sont sphériques.

F I G. I

distribution of large precipitates

distribution of small precipitates

laser beam

101. crystal surface

105. DZ width

103. small defects

104. very small defects

102. crystal surface

11

depth from crystal surface

12. defect density in unit volume

F I G.  2

EP 0 319 797 B1

(a) Scattering light image ( laser tomogram )

(b) Distribution of scattering light imag intensity
( distribution on line L - L' )

# F I G. 3

(a) Scattering light image

(b) Digitization processing

(c) Contraction processing

# F I G. 4

F I G. 5

Tomogram image

Laser beam

Beam
diameter

Crystal

Sample
sacanning
direction

# F I G. 6

Measurement started.

Sample placed on holder. — S1

Holder moved to observation position and reqister incidence plane of light and observation plane to predetermined positions. — S2

Scattering light image obtained. — S3

Digitization processing carried out. — S4

Contraction processing carried out. — S5

Defect density distribution and DZ width measured. — S6

Measurement finished.

DZ width calculated from uni-dimensional distribution of scattering intensity. — S7

Measurement finished.

# F I G. 7

35. data buffer

36. pulse counter

34. line sensor

31. laser beam

33. object lens

32. sample

sample scanning

# F I G. 8

F I G. 9

Comparative average diameter
of precipitates

F I G. 10

F I G. 11